# EUROPEAN PATENT SPECIFICATION

(11) **EP 3 159 572 B1**
(45) Date of publication and mention of the grant of the patent: **03.06.2020**
(21) Application number: 15808893.0
(22) Date of filing: 19.06.2015
(51) Int. Cl.: F16F 1/12, F16F 1/06, F16F 1/04

(54) **COILED SPRING ASSEMBLY**
SPULENFEDERANORDNUNG
ENSEMBLE RESSORT HÉLICOÏDAL

(30) Priority: 19.06.2014 JP 2014126594
(43) Date of publication of application: 26.04.2017
(73) Proprietor: NHK Spring Co., Ltd., Yokohama-shi, Kanagawa 236-0004 (JP)
(72) Inventor: KATO, Nobuharu, Kamiina-gun Nagano 399-4301 (JP); TSURUGAI, Kengo, Kamiina-gun Nagano 399-4301 (JP); MORIMOTO, Masafumi, Kamiina-gun Nagano 399-4301 (JP)
(74) Representative: Oppermann, Frank
(86) International application number: PCT/JP2015/003092
(87) International publication number: WO 2015/194192

(56) References cited:
- EP-A1- 0 539 955
- EP-A2- 1 621 769
- JP-A- H01 104 719
- JP-A- H05 126 189
- JP-A- 2006 063 379
- JP-A- 2006 063 379
- JP-A- 2006 338 991
- JP-A- 2007 064 345
- JP-B2- 4 699 273
- US-A- 3 901 494
- US-A- 4 735 403

## Description

### FIELD OF THE INVENTION

The present invention relates to a coiled spring assembly used as, for example, a transmission damper or a rebound spring for a chassis of a vehicle.

### BACKGROUND OF THE INVENTION

Conventionally, as a coiled spring assembly of this kind, there is one disclosed in Patent document 1.

The coiled spring assembly is provided with a coiled spring and a spring seat member. The spring seat member is attached to an end turn of the coiled spring and is provided with a seat body and a spring attachment member.

The seat body has a seat portion and a mounting shaft portion. The seat portion is formed annularly to be brought into contact with an end face of the end turn of the coiled spring. The mounting shaft portion protrudes from a center of the seat portion and has an annular engagement groove formed on an outer periphery at a middle portion in an axial direction.

The spring attachment member is a hollow cylinder, has elastically-locking parts that are flexibly deformable in a radial direction, and is attached to the seat body by the elastically-locking parts engaging with the engagement groove of the mounting shaft portion. The engagement is performed by using outward flexural deformation of the elastically-locking parts in the radial direction.

The spring attachment member is attached into the end turn of the coiled spring by using inward flexural deformation of the elastic-locking member in the radial direction.

It, therefore, is possible to improve workability for attaching the spring attachment member to the coiled spring while improving workability for attaching it to the seat member and prevent or reduce a drop-off after the attachment.

Since the spring seat member, however, needs the spring attachment member in addition to the seat body, the number of parts is increased to complicate manufacturing and part management and result in a cost increase.

On the other hand, Patent document 2 discloses a structure in which a single seat member is engaged with an end portion of a coiled spring.

There, however, is a problem that it is the simply-engaging structure regardless of proper engagement between the seat member and the coiled spring and causes forced interference between an end turn of the coiled spring and the seat member, thereby to deteriorate durability and cause a large gap between the end turn and the seat member to destabilize attachment.

EP 1 621 769 A2 describes a suspension spring and snubber arrangement for reducing transmitted noise from a compressor. The snubber helps to maintain the integrity and shape of the suspension spring and also prevents the suspension spring from being displaced from their intended position. The suspension spring is a helical having two opposing open ends. The open ends of the spring are formed with a reduced diameter relative to the body portion defining a transition portion between the end turn and the body portion with a diameter gradually increasing from the end turn to the body portion. One open end of the suspension spring 60 is may be loosely fitted over the snubber, such that the suspension spring 60 reduces physical contact with the snubber. To ensure that the suspension spring does not slip off or fall away from the snubber, the snubber is further provided with a groove at the base, so that an enlarged diameter portion is formed. The whole transition portion comprising a plurality of turns as well as a part of the body portion circumvents the enlarged diameter portion.

JP 2006 063379 A describes a coiled spring in which the thickness of a white layer is 4 ≤ µm, the hardness of the surface layer part is 700 to 900 by Hv, and the internal hardness is ≥ 580 by Hv.

EP 0 539 955 A1 describes a spring assembly for a transmission of automobiles comprising ring-shaped retainers having a plurality of mounting protrusions circumferentially formed on the spring retainers, and a plurality of coil springs mounted on the mounting protrusions of the spring retainers. The mounting portions are integrally formed on the retainers. Each mounting portion comprises a mounting shaft portion protruding from a surface of the spring retainer and an enlarged diameter portion formed at a front end of the mounting shaft portion. The coiled spring comprises an end turn having a reduced diameter. The end turn is in contact with the mounting shaft portion and the first turn of the coiled spring is in contact with the enlarged diameter portion of the mounting portion.

In order to prevent the seat member from dropping off from the coiled spring when used, it is required to sufficiently secure an engagement interference (press-fit interference) between the seat member and the end turn of the coiled spring. This causes another problem that the end turn is broken by being largely deformed outward in the radial direction when the seat member is engaged with the end turn of the coiled spring by press fit.

US 3 901 494 A describes an auxiliary coil spring installation for a vehicle for improving stability in load-carrying capability of the vehicle. The coil spring installation comprises a regular coil spring having an enlarging coil diameter, which is mounted directly over the rear axle. The end portion of the regular coil spring fits between a bearing surface and an enlarged diameter portion of a mounting shaft portion. Furthermore, the coil spring installation comprises an auxiliary coil spring which lower end is retained by a saddle assembly. At the upper part of the saddle assembly is a cylindrical integral retainer configuration and the lower end of spring fits around it.

### PRIOR ART DOCUMENT

### PATENT DOCUMENT

PATENT DOCUMENT 1: JP4699273B
PATENT DOCUMENT 2: JP2007-64345A

### SUMMARY OF THE INVENTION

### PROBLEMS TO BE SOLVED BY THE INVENTION

A problem to be solved is that it takes no account of proper engagement between the seat member and the coiled spring to cause forced interference between the end turn of the coiled spring and the seat member, thereby to deteriorate durability, and it causes the end turn to be broken by being largely deformed outward in the radial direction when the seat member is engaged with the end turn of the coiled spring by press fit if the engagement interference (press-fit interference) between the seat member and the end turn of the coiled spring is sufficiently secured.

### MEANS FOR SOLVING THE PROBLEM

The present invention provides a coiled spring member, capable of properly engaging a seat for a coiled spring as a seat member with a coiled spring to suppress forced interference between an end turn of the coiled spring and the seat for the coiled spring and increase durability. The coiled spring assembly comprises a coiled spring having an end turn at each end of a body portion and a seat for the coiled spring attached to the end turn. The coiled spring, the end turn of which is formed up to a first turn with a reduced diameter relative to the body portion, has between the end turn and the body portion a transition portion with a diameter gradually increasing from the end turn to the body portion. The seat for the coiled spring has a seat portion, a receiving surface of which is in contact with a bearing surface of the end turn, a mounting shaft portion protruding from the receiving surface of the seat portion, an enlarged diameter portion formed at a front end of the mounting shaft potion for guiding press fit. The mounting shaft portion has an axial length defining a clearance or a zero-clearance between the enlarged diameter portion of the seat for the coiled spring and the end turn in a free state in which the end turn is fitted to the mounting shaft portion and the bearing surface of the end turn is in contact with the receiving surface of the seat portion. The transition portion circumvents the enlarged diameter portion while the bearing surface of the end turn is in contact with the receiving surface of the seat portion.

The present invention in the aforementioned coiled spring assembly provides the coiled spring with a surface hardened layer of a depth being 50µm and a white layer of a depth from a surface being 3µm or less in order to prevent the end turn from being broken while sufficiently securing an engagement interference (press-fit interference) between the seat member and the end turn of the coiled spring.

### EFFECT OF THE INVENTION

The mounting shaft portion according to the present invention has the axial length defining the clearance or the zero-clearance between the enlarged diameter portion of the seat for the coiled spring and the end turn in a free state in which the end turn is fitted to the mounting shaft portion and the bearing surface of the end turn is in contact with the receiving surface of the seat portion. The transition portion circumvents the enlarged diameter portion while the bearing surface of the end turn is in contact with the receiving surface of the seat portion.

Accordingly, the seat for the coiled spring is attached so that the mounting shaft portion is fitted to the end turn formed up to the first turn of the coiled spring, thereby to securely circumferentially fit the seat for the coiled spring and the end turn with each other.

Further, since the transition portion of the coiled spring circumvents the enlarged diameter portion while the bearing surface of the end turn is in contact with the receiving surface of the seat portion, the bearing surface of the end turn and the receiving portion of the seat portion are securely brought into contact with each other to properly assemble the seat for the coiled spring and the coiled spring.

With this assembling, it increases the durability of the coiled spring assembly and suppresses a gap between the end turn and the seat for the coiled spring to stabilize the attachment.

The present invention in the aforementioned coiled spring assembly provides the coiled spring with the surface hardened layer of the depth being 50µm and the white layer of the depth from the surface being 3µm or less.

Accordingly, it increases toughness of the coiled spring to prevent the end turn from being broken while sufficiently securing the engagement interference (press-fit interference) between the seat member and the end turn of the coiled spring.

### BRIEF DESCRIPTION OF THE DRAWINGS

[FIG. 1] It is a side view illustrating a coiled spring and a seat for the coiled spring resolved from a coiled spring assembly. (Embodiment 1)
[FIG. 2] It is an enlarged side view of the seat for the coiled spring. (Embodiment 1)
[FIG. 3] It is table illustrating dimensions of parts of the seat for the coiled spring.
[FIG. 4] (A) is a graph illustrating change in hardness from a surface to an inside of the coiled spring and (B) is a graph illustrating change in hardness on the surface side of the coiled spring.
[FIG. 5] (A) is an explanatory view illustrating generation of cracks relative to shear stress and (B) is an explanatory view illustrating indexes for the number of generation of cracks.
[FIG. 6] It is an explanatory view illustrating generation of cracks relative to bending stress in a relation between a white layer and a surface layer.
[FIG. 7] It is a graph illustrating press-fit interference ranges.
[FIG. 8] (A) is a sectional view of an essential part and (B) is an enlarged sectional view of the essential part illustrating attachment of the seat for the coiled spring. (Embodiment 1)
[FIG. 9] (A) is a sectional view of an essential part and (B) is an enlarged sectional view of the essential part illustrating attachment of the seat for the coiled spring. (Comparative example).

### EMBODIMENT FOR CARRYING OUT THE INVENTION

The object that is to properly engage a seat for a coiled spring as a seat member with a coiled spring to prevent forced interference between an end turn of the coiled spring and the seat for the coiled spring and increase durability is accomplished by a coiled spring assembly in which a coiled spring has an end turn that is formed up to a first turn with a reduced diameter relative to a body portion and a transition portion a transition portion with a diameter gradually increasing from the end turn to the body portion between the end turn and the body portion and the seat for the coiled spring has a seat portion, a receiving surface of which is in contact with a bearing surface of the end turn, a mounting shaft portion protruding from the receiving surface of the seat portion, an enlarged diameter portion formed at a front end of the mounting shaft potion for guiding press fit. The mounting shaft portion has an axial length defining a clearance or a zero-clearance between the enlarged diameter portion of the seat for the coiled spring and the end turn in a free state in which the end turn is fitted to the mounting shaft portion and the bearing surface of the end turn is in contact with the receiving surface of the seat portion. The transition portion circumvents the enlarged diameter portion while the bearing surface of the end turn is in contact with the receiving surface of the seat portion.

Further, the object that is to prevent the end turn from being broken while sufficiently securing an engagement interference (press-fit interference) between the seat member and the end turn of the coiled spring is accomplished by the coiled spring that has a surface hardened layer of a depth being 50µm and a white layer of a depth from a surface being 3µm or less.

### EMBODIMENT 1

### [COILED SPRING]

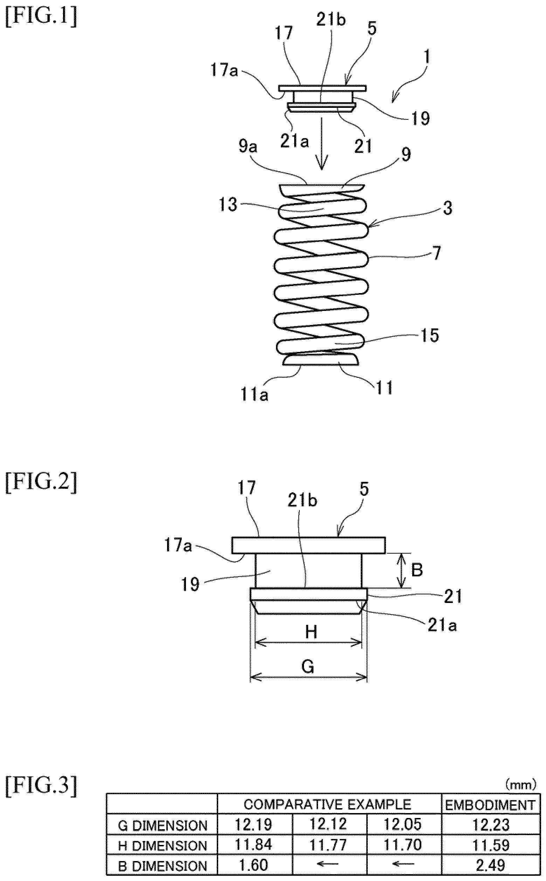

FIG. 1 is a side view illustrating a coiled spring and a seat for the coiled spring resolved from a coiled spring assembly according to the embodiment 1 of the present invention.

The coiled spring assembly 1 of FIG. 1 is used as, for example, a transmission damper or a rebound spring for a chassis of a vehicle.

The coiled spring assembly 1 comprises a coiled spring 3 and a seat 5 for the coiled spring.

The coiled spring 3 is not limited in material, but is made of, for example, high strength material such as oil-tempered silicon-chromium spring steel wire (SWOSC), and is provided with end turns 9 and 11 formed at respective ends of a body portion 7 up to first turns with a relatively reduced diameter. Between the body portion 7 and the end turns 9 and 11, the coiled spring has transition portions 13 and 15 with a diameter gradually increasing from the end turns 9 and 11 to the body portion 7.

The coiled spring 3 has a surface layer of a depth being 50µm and a white layer of a depth from a surface being 3µm or less, preferably about 1.5µm according to nitriding treatment. Hardness of the white layer of the coiled spring 3 is set to 750Hv or more. With the setting of the surface layer, the white layer and the hardness, it gives the end turns 9 and 11 toughness so as to prevent breakage when press-fitting the seat 5 for the coiled spring.

Bearing surface grinding for the end turns 9 and 11 is conducted in a range circumferentially exceeding 180 degrees, for example, a range of 270 degrees (3/4 turn) from a tip in general to form the bearing surfaces 9a and 11a. The bearing surfaces, therefore, are brought into stably contact with and seat on after-explained receiving surfaces of the seats 5 for the coiled spring.

The seat 5 for the coiled spring is not limited in material, but is made of steel material subjected to carbonitriding hardening and quenching such as carbon steel for machine structural use (S45C, S60C, or others), headed (for cold forging) carbon steel (SWCH), or the like.

For example, a pair of the seats 5 for the coiled springs are provided and attached to the respective end turns 9 and 11. In FIG. 1, only the seat 5 for the coiled spring on the end turn 9 side is indicated and explained. An attaching structure of the seat for the coiled spring on the end turn 11 side is the same as that on the end turn 9 side and explanation therefor is omitted.

The seat 5 for the coiled spring has a seat portion 17, a mounting shaft portion 19 and an enlarged diameter portion 21.

The seat portion 17 is formed annularly and has a receiving surface 17a. An outer diameter of the seat portion 17 is equal to or slightly larger or smaller than that of the end turn 9. With this, the seat portion 17 is allowed to be brought into stably contact with the end turn 9.

The mounting shaft portion 19 concentrically protrudes from the receiving surface 17a of the seat portion 17 and has the enlarged diameter portion 21 formed at a front end of the mounting shaft portion 19 for guiding press fit. An outer diameter of the enlarged diameter portion 21 is larger than an inner diameter of the end turn 9 and has a press-fit interference. On an outer periphery of a front end of the enlarged diameter portion 21, a chamfer 21a is formed for guiding the press fit.

The mounting shaft portion 19 is set to have an axial length defining a clearance or a zero-clearance between the enlarged diameter portion 21 of the seat 5 for coiled spring and the end turn in a free state in which the end turn 9 is fitted to the mounting shaft portion and the bearing surface 9a of the end turn 9 is in contact with the receiving surface 17a of the seat portion 17.

Fitting the end turn 9 to the mounting shaft portion 19 is circumferentially performed by the end turn 9 forming the first turn of the coiled spring 3 along the perimeter of the mounting shaft portion 19.

A clearance between the end turn 9 and the enlarged diameter portion 21 only has to be of a degree to which the end turn 9 does not come into contact with the enlarged diameter portion 21 and does not need to be unnecessarily secured. A state of a zero clearance means a state in which the end turn 9 is in contact with the enlarged diameter portion 21 and stress does not act on the end turn 9.

The transition portion 13 circumvents the enlarged diameter portion 21 while the bearing surface 9a of the end turn 9 is in contact with the receiving surface 17a of the seat portion 17, thereby to prevent the transition portion 13 from coming into contact with the enlarged diameter portion 21.

The circumvention is realized so that the transition portion 13 gradually enlarge a convolution from the end turn 9 to the body portion 7. With this circumvention, the transition portion 13 does not come into contact with the enlarged diameter portion 21 or becomes a state in which the clearance is zero even if the end turn 9 relatively moves toward the mounting shaft portion 19 in the radial direction.

### [PRESS FIT RANGE AND CRACK]

FIG. 2 is an enlarged side view of the seat for the coiled spring and FIG. 3 is table illustrating dimensions of parts of the seat for the coiled spring.

As illustrated in FIG. 2, the axial length of the mounting shaft portion 19 of the seat 5 for the coiled spring is a B dimension, the diameter of the mounting shaft portion 19 is a H dimension, and the diameter of the enlarged diameter portion 21 is a G dimention.

As illustrated in FIGs. 2 and 3, the G dimension of the embodiment is made larger than of three comparative examples. Enlarging the G dimension makes the press-fit interference larger. The value of the G dimension is set larger than a maximum value of the inner diameter of the end turn 9 taking into account of tolerance. Enlarging the press-fit interference prevents the seat 5 for the coiled spring from dropping off from the end turn 9. The three comparative examples are for indicating general dimensional measure for a seat for a coiled spring.

The coiled spring 3 of the embodiment of the present invention is subjected to nitriding treatment capable of preventing the breakage of the end turn 9 regardless of material even if the press-fit interference is larger by comparison with the coiled springs of the comparative examples subjected to nitriding treatment.

Namely, the embodiment of the present invention forms the surface layer of the depth being 50µm and the white layer of the depth from the surface being 3µm or less, preferably about 1.5µm according to nitriding treatment as explained above. The hardness of the white layer of the coiled spring 3 is set to 750Hv or more as explained above. With this, both the high hardness of the surface layer and the softness of the white layer are realized, so that the coiled spring 3 having the high toughness is obtained.

On the other hand, the comparative examples form surface layers of 80-120µm and white layers of 2.5-5µm, toughness is low though hardness is secured, and there is a disadvantage that end turns are broken if press-fit interferences are larger like the embodiment of the present invention.

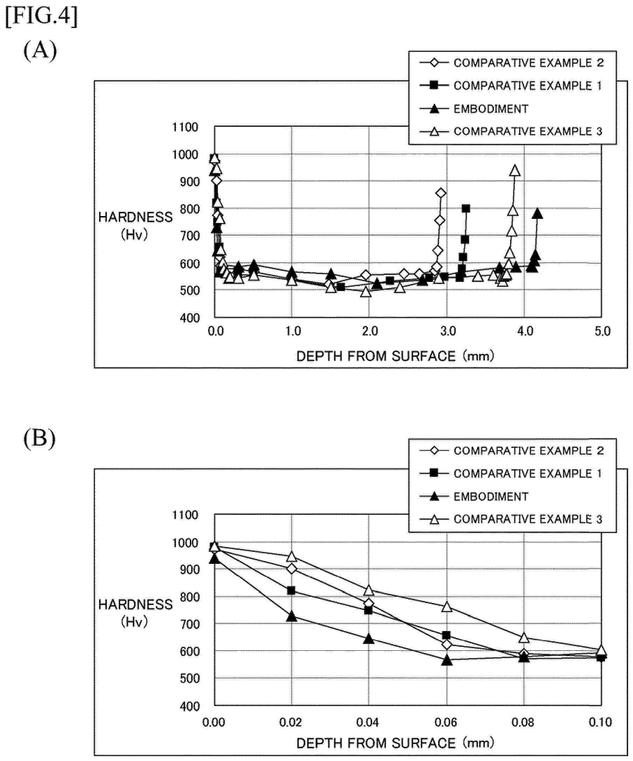

FIGs. 4 show the embodiment of the present invention and the three comparative examples in which (A) is a graph illustrating change in hardness from the surface to an inside of the coiled spring and (B) is a graph illustrating change in hardness on the surface side of the coiled spring. The ordinate of FIGs. 4 indicates Vickers hardness (Hv) and the abscissa indicates a depth (mm) from the surface.

As illustrated in FIGs. 4, the coiled spring 3 of the embodiment of the present invention has the hardness slightly exceeding 600Hv at the depth of 50µm from the surface whereas the coiled springs of the three comparative examples have the hardness exceeding 600Hv also at the depth of 60µm from the surfaces.

In this way, the coiled spring 3 of the embodiment of the present invention employs different setting in hardness and toughness from the three comparative examples. With this setting, the coiled spring 3 realizes both the high hardness of the surface layer and the softness of the white layer and has the high toughness relative to the comparative examples.

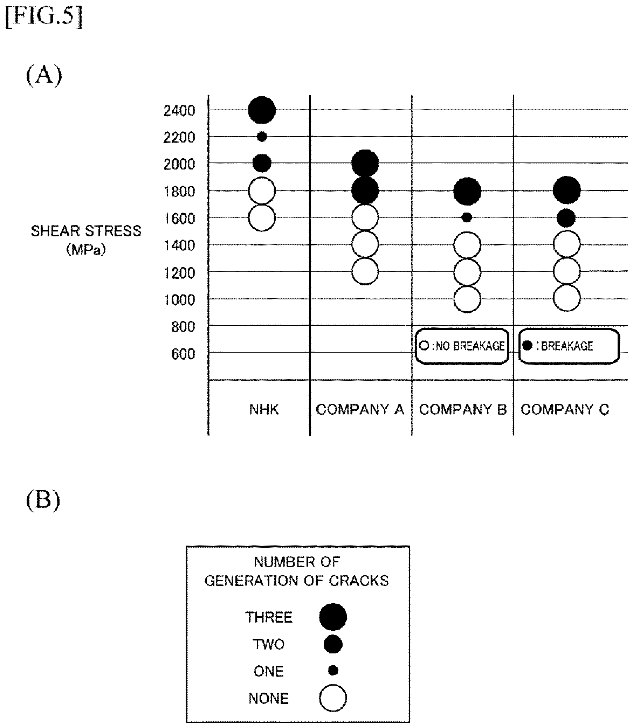

FIG. 5 (A) is an explanatory view illustrating generation of cracks relative to shear stress and (B) is an explanatory view illustrating indexes for the number of generation of cracks of (A). An effective portion of the coiled spring is cut into a ring shape and it is stretched from both sides as illustrated with an outlined arrow in the drawing to test the generation of cracks. An ordinate of FIGs. 5 represents bending stress (aMpa).

The generation of cracks is classified into four types, three, two, one and none, and then correspondence thereof to bending stress is observed.

As illustrated in FIGs. 5, the present embodiment results in generating no crack up to the bending stress of σ=1800MPa, two cracks at 2000MPa, one crack at 2200MPa, and three cracks at 2400Mpa.

All of the comparative examples 1, 2 and 3 result in generating three cracks at σ=1800MPa.

According to the results, it is understood that the present embodiment allows the press-fit interference range to be larger than the comparative examples.

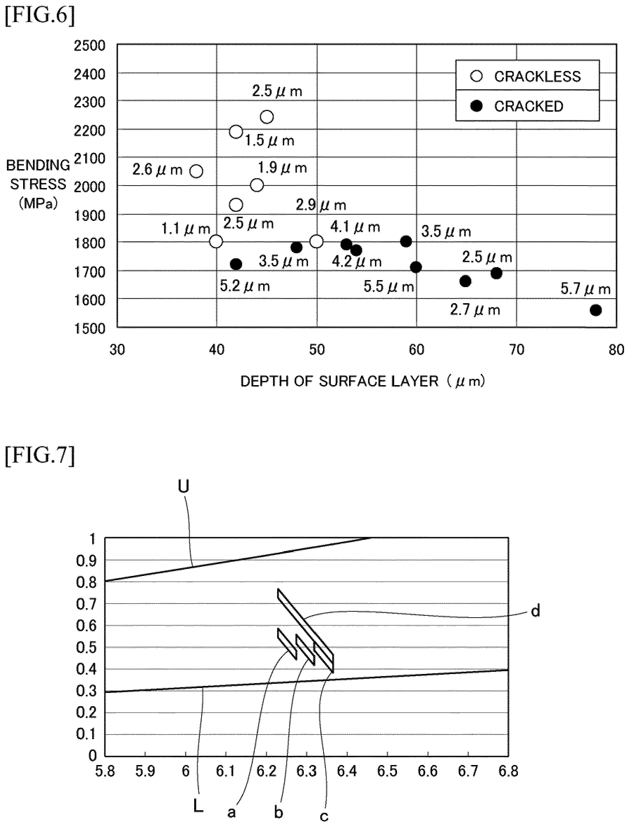

FIG. 6 is an explanatory view illustrating generation of cracks relative to bending stress in a relation between a white layer and a surface layer. An ordinate of FIG. 6 represents bending stress (MPa) and an abscissa represents depth (µm) of the surface layer. In this case, stretching is conducted similarly to the case of FIGs. 5 to check generation of cracks.

As illustrated in FIG. 6, in the surface layer of 50µm and the white layer of about 3.0µm or less, no crack is generated even at σ=1800MPa or more as indicated with the outlined circle. The configuration of this surface layer of 50µm and the white layer of about 3.0µm or less prevents cracks from being generated regardless of material of the coiled spring 3.

On the other hand, in a case of the surface layer of 50µm or less, cracks are generated in the white layer of 3.5µm and the white layer of 5.2µm even at a range of σ=1800MPa or less.

Further, in a range of 50µm or more of the surface layer, cracks are generated in any one of the white layers of 2.5-5.7µm at the range of σ=1800MPa or less.

As is apparent from these results, the coiled spring 3 having high toughness so as not to easily generate cracks while having high surface hardness can be obtained according to the combination of the surface layer having the depth of 50µm and the white layer of 3µm or less from the surface.

The press-fit interference range can be enlarged according to such unconventional characteristics of the coiled spring 3 of the embodiment of the present invention.

FIG. 7 is a graph illustrating press-fit interference ranges. An abscissa represents an inner diameter of a coiled spring and an ordinate represents a press-fit interference. The segment U of FIG. 7 represents a maximum press-fit interference that is a limit not to cause a coiled spring to be broken and the segment L represents a minimum press-fit interference that is a limit not to cause a seat for a coiled spring to be dropped off from the coiled spring when used.

As illustrated in FIG. 7, in the comparative examples, selection from among three kinds of press-fit interference ranges a, b, and c is performed according to inner diameters of coiled springs in view of breakage at the time of press fit. The reason for the selection from among the three kinds a, b, and c is that the coiled springs of the comparative examples have relatively low toughness and small deformable allowances relative to the inner diameters. In the comparative examples, it is observed that the seats for the coiled springs drop off from the coiled springs even under the selection of these press-fit interference ranges.

On the other hand, the coiled spring 3 of the present embodiment has the far larger toughness than of the comparative examples and expands the press-fit interference range to d. This press-fit interference range d covers all the three kinds of the press-fit interference ranges a, b, and c of the comparative examples regardless of the inner diameter of the coiled spring 3. Further, in the press-fit interference range d of this embodiment, the seat 5 for the coiled spring never drops off from the coiled spring 3.

### [Proper attachment]

Returning to FIGs. 2 and 3, the H dimension of the seat 5 for the coiled spring of this embodiment is smaller than of the comparative examples. It is smaller than one in a case of a minimum inner diameter of the end turn 9 taking into account of tolerance and therefore is the dimension in which interference is prevented relative to the coiled spring 3 and the end turn 9 provides stress relaxation.

The B dimension is larger than of the comparative examples. This dimension is set so as not to hit the enlarged diameter portion 21 with the first turn of the coiled spring 3.

Namely, the seat 5 for the coiled spring of the embodiment of the present invention is set to 2.49mm longer than 1.60mm of the comparative example in the B dimension in a case where the diameter of the element wire of the coiled spring is 22mm, the coiled end turn outer diameter is 16.90mm, and the coiled end turn inner diameter is 11.65mm.

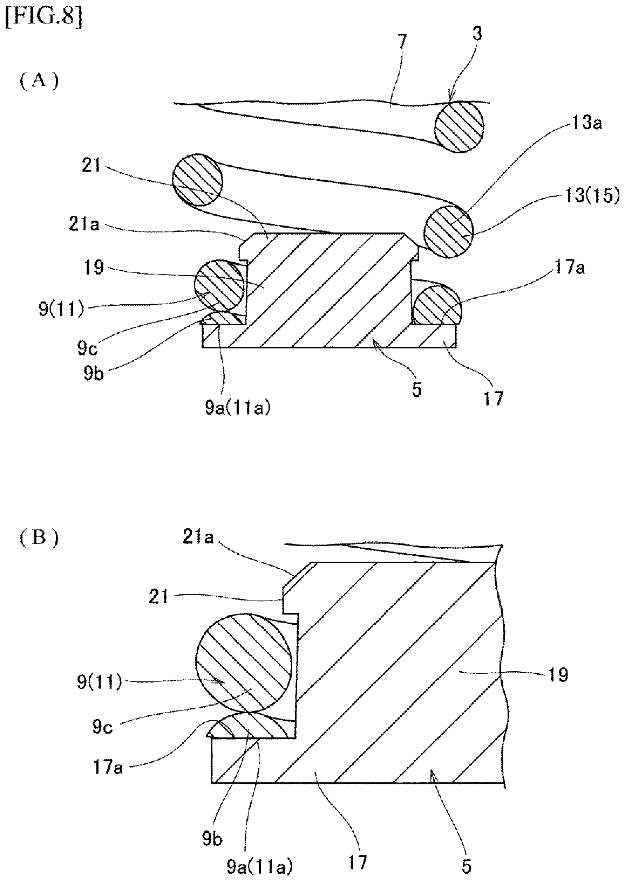

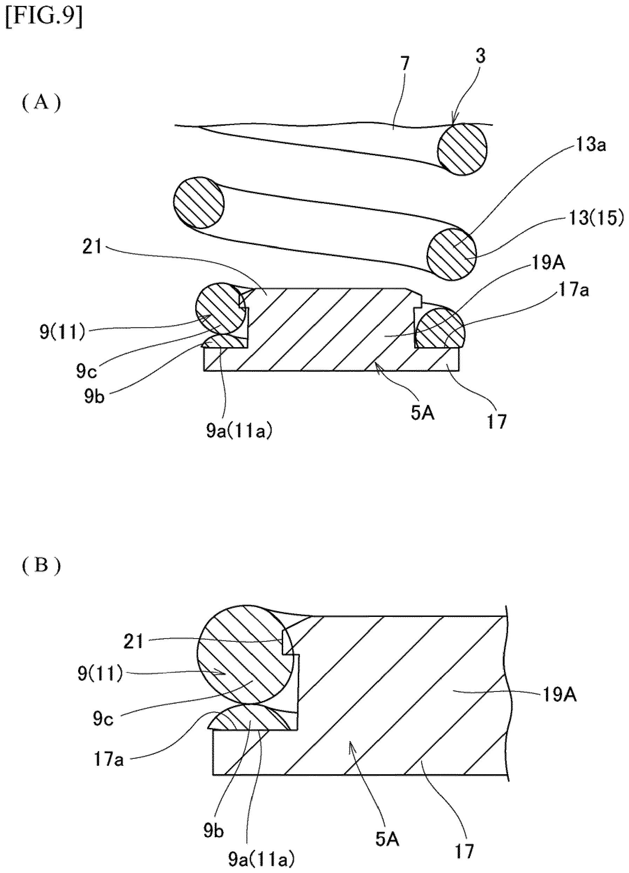

With this setting of the B dimension, attachment of the seat 5 for the coiled spring to the end turn 9 is as illustrated in FIGs. 8. FIGs. 9 are for the comparative examples.

FIGs. 8 illustrate attachment of the seat for the coiled spring of the present embodiment in which (A) is a sectional view of an essential part and (B) is an enlarged sectional view of the essential part.

In each part of the seats for the coiled springs of the embodiment and the comparative examples of FIG. 3, the difference in the axial lengths B of the mounting shaft portions results in the presence or absence of the interference in FIGs. 8 and 9.

As illustrated in FIGs. 8, in the embodiment of the present invention, the first turn 9c of the element wire located over the tip 9b has a clearance relative to the enlarged diameter portion 21 in a free length state of the end turn 9 9 in which the end turn is fitted to the mounting shaft portion 19 and the bearing surface 9a of the end turn 9 is in contact with the receiving surface 17a of the seat portion 17.

The transition portion 13 transitions to circumvent the enlarged diameter portion 21 and not to come into contact with the same in the course of gradually enlarging the coil diameter while keeping the clearance. At a position of the further half turn 13a on the transition portion 13, the transition portion is offset with the clearance on an outer peripheral side of the enlarged diameter portion 21 and transitions to the body portion 7. According to the embodiment, it is led axially outward from the seat 5 for the coiled spring before reaching the second turn.

According to the embodiment of the present invention of FIGs. 8, therefore, the B dimension (FIG. 2) of the seat 5 for the coiled spring is large so that the end turn 9 and the transition portion 13 do not interfere with the enlarged diameter portion 21. With this, it keeps the durability of the coiled spring assembly 1 and suppresses the gap between the bearing surface 9a of the end turn 9 and the receiving surface 17a of the seat 5 for the coiled spring, thereby to stabilize the attachment.

On the other hand, according to the comparative example of FIGs. 9, the B dimension (FIG. 2) of the seat 5A for the coiled spring is relatively small so that the first turn 9c of the element wire located over the tip 9b of the coiled spring 3 interferes with the enlarged diameter portion 21 in a state where the bearing surface 9a of the end turn 9 is in contact with the receiving surface 17a of the seat portion 17. The transition portion to the second turn takes a form also interfering with the enlarged diameter portion 21 though it is not indicated in the drawing due to the cross section. In addition, FIGs. 9 illustrates the interfering portions in superposition.

Such a structure of the comparative example causes forced interference between the end turn 9 of the coiled spring 3 and the seat 5A for the coiled spring, thereby to deteriorate durability and cause a large gap between the bearing surface 9a of the end turn 9 and the receiving surface 17a of the seat 5A for the coiled spring to destabilize the attachment.

### DESCRIPTION OF NOTATIONS

3, 3A Coiled spring
3Aa Coiled inner diameter side
3Ab Coiled outer diameter side
5, 5A Seat for the coiled spring
7 Body portion
9, 9A, 11, 11A End turn
9a, 9Aa, 11a, 11Aa Bearing surface
13, 15 Transition portion
17 Seat portion
17a Receiving surface
19, 19A Mounting shaft portion
21 Enlarged diameter portion

## Claims

1. A coiled spring assembly comprising:
a coiled spring (3) having an end turn (9, 11) at each end of a body portion (7) and a seat (5) for the coiled spring attached to the end turn, wherein
the coiled spring (3), the end turn (9, 11) of which is formed up to a first turn (9c) with a reduced diameter relative to the body portion (7), has between the end turn (9, 11) and the body portion (7) a transition portion (13, 15) with a diameter gradually increasing from the end turn to the body portion,
the seat (5) for the coiled spring has a seat portion (17), a receiving surface (17a) of which is in contact with a bearing surface (9a, 11a) of the end turn (9, 11), a mounting shaft portion (19) protruding from the receiving surface of the seat portion, an enlarged diameter portion (21) formed at a front end of the mounting shaft portion for guiding press fit,
the mounting shaft portion (19) has an axial length defining a gap between the enlarged diameter portion (21) of the seat (5) for the coiled spring and the end turn (9, 11) in a free state in which the end turn is fitted to the mounting shaft portion (19) and the bearing surface (9a, 11a) of the end turn (9, 11) is in contact with the receiving surface (17a) of the seat portion (17), and
the transition portion (13, 15) circumvents the enlarged diameter portion (21) while the bearing surface (9a, 11a) of the end turn (9, 11) is in contact with the receiving surface (17a) of the seat portion (17),
**characterized in that**
the transition portion (13, 15) is led axially outward from the seat (5) before reaching the second turn,
the first turn (9c) of the element wire located over the tip (9b) of the coiled spring (3) having a clearance relative to the enlarged diameter portion (21) in a free length state of the end turn (9, 11),
the transition portion (13) transitions not to come into contact with the enlarged diameter portion (21), and
at a position of the further half turn (13a) on the transition portion (13), the transition portion (13) is offset with the clearance on an outer peripheral side of the enlarged diameter portion (21) and transitions to the body portion (7).

2. The coiled spring assembly according to claim 1, wherein
the coiled spring (3) has a surface hardened layer of a depth being 50µm and a white layer of a depth from a surface being 3µm or less.

3. The coiled spring assembly according to claim 2, wherein
hardness of the white layer of the coiled spring (3) is equal to or more than 750Hv.

## Patentansprüche

1. Eine Spulenfederanordnung aufweisend:
eine Spulenfeder (3), die eine Endwicklung (9, 11) an jedem Ende eines Basisteils (7) und einen an der Endwicklung befestigten Sitz (5) für die Spulenfeder hat, wobei
die Spulenfeder (3), deren Endwicklung (9, 11) bis zu einer ersten Wicklung (9, 11) mit einem in Bezug auf das Basisteil (7) reduzierten Durchmesser geformt ist, zwischen der Endwicklung (9, 11) und dem Basisteil (7) einen Übergangsbereich (13, 15) mit einem Durchmesser hat, der von der Endwicklung bis zu dem Basisteil graduell zunimmt,
der Sitz (5) für die Spulenfeder einen Sitzabschnitt (17) hat, von dem eine Aufnahmefläche (17a) mit einer Lagerfläche (9a, 11a) der Endwicklung (9, 11) in Kontakt ist, wobei ein Abschnitt (21) mit einem vergrößerten Durchmesser an dem vorderen Ende des Befestigungsschaftabschnitts für einen Führungspresssitz ausgebildet ist,
der Befestigungsschaftabschnitt (19) eine axiale Länge hat, die einen Spalt zwischen dem Abschnitt (21) mit einem vergrößerten Durchmesser des Sitzes (5) für die Spulenfeder und der Endwicklung (9, 11) in einem freien Zustand definiert, in dem die Endwicklung an den Befestigungsschaftabschnitt (19) angepasst ist und die Lagerfläche (9a, 11a) der Endwicklung (9, 11) mit der Aufnahmefläche (17a) des Sitzabschnitts (17) in Kontakt ist, und
der Übergangsbereich (13, 15) den Abschnitt (21) mit einem vergrößerten Durchmesser umgeht, während die Lagerfläche (9a, 11a) der Endwicklung (9, 11) mit der Aufnahmefläche (17a) des Sitzabschnitts (17) in Kontakt ist,
**dadurch gekennzeichnet, dass**
sich der Übergangsbereich (13, 15) von dem Sitz (5) axial nach außen erstreckt, bevor der Übergangsbereich die zweite Wicklung erreicht,
die erste Wicklung (9c) des Drahtelements, die sich oberhalb der Spitze (9b) der Spulenfeder befindet, in einem Zustand einer freien Länge der Endwicklung (9, 11) ein Spiel in Bezug auf den Abschnitt (21) mit einem vergrößerten Durchmesser hat,
der Übergangsbereich (13) sich erstreckt ohne mit dem Abschnitt (21) mit einem vergrößerten Durchmesser in Kontakt zu kommen, und
in einer Position der weiteren halben Wicklung (13a) auf dem Übergangsbereich (13) der Übergangsbereich (13) mit dem Spiel auf einer äußeren Umfangsseite des Abschnitts (21) mit einem vergrößerten Durchmesser versetzt ist und sich zu dem Basisteil (7) erstreckt.

2. Die Spulenfederanordnung nach Anspruch 1, wobei die Spulenfeder (3) eine oberflächengehärtete Schicht mit einer Tiefe zwischen 50 µm und eine weiße Schicht mit einer Tiefe von der Oberfläche von 3 µm oder kleiner hat.

3. Die Spulenfederanordnung nach Anspruch 1, wobei die Härte der weißen Schicht der Spulenfeder (3) 750 Hv ist oder größer als 750 Hv ist.

## Revendications

1. Ensemble ressort hélicoïdal comprenant :
un ressort hélicoïdal (3) ayant une spire terminale (9, 11) à chaque extrémité d'une portion de corps (7) et un siège (5) pour le ressort hélicoïdal attaché à la spire terminale, dans lequel
le ressort hélicoïdal (3), dont la spire terminale (9, 11) est formée jusqu'à une première spire (9c) avec un diamètre réduit par rapport à la portion de corps (7), a, entre la spire terminale (9, 11) et la portion de corps (7), une portion de transition (13, 15) avec un diamètre augmentant progressivement de la spire terminale jusqu'à la portion de corps,
le siège (5) pour le ressort hélicoïdal a une portion de siège (17), dont une surface réceptrice (17a) est en contact avec une surface porteuse (9a, 11a) de la spire terminale (9, 11), une portion d'arbre de montage (19) faisant saillie depuis la surface réceptrice de la portion de siège, une portion de diamètre accru (21) formée à une extrémité avant de la portion d'arbre de montage pour guider un ajustement sous presse,
la portion d'arbre de montage (19) a une longueur axiale définissant un écartement entre la portion de diamètre accru (21) du siège (5) du ressort hélicoïdal et la spire terminale (9, 11) dans un état libre dans lequel la spire terminale est ajustée sur la portion d'arbre de montage (19) et la surface porteuse (9a, 11a) de la spire terminale (9, 11) est en contact avec la surface réceptrice (17a) de la portion de siège (17), et
la portion de transition (13, 15) contourne la portion de diamètre accru (21) pendant que la surface porteuse (9a, 11a) de la spire terminale (9, 11) est en contact avec la surface réceptrice (17a) de la portion de siège (17),
**caractérisé en ce que**
la portion de transition (13, 15) est dirigée axialement vers l'extérieur depuis le siège (5) avant d'atteindre la deuxième spire,
la première spire (9c) du fil élément situé sur la pointe (9b) du ressort hélicoïdal (3) ayant un dégagement par rapport à la portion de diamètre accru (21) dans un état de longueur libre de la spire terminale (9, 11),
la portion de transition (13) est en transition pour ne pas venir en contact avec la portion de diamètre accru (21), et
à une position de l'autre demi-spire (13a) sur la portion de transition (13), la portion de transition (13) est décalée par rapport au dégagement sur un côté périphérique extérieur de la portion de diamètre accru (21) et est en transition vers la portion de corps (7).

2. Ensemble ressort hélicoïdal selon la revendication 1, dans lequel le ressort hélicoïdal (3) a une couche durcie en surface d'une profondeur de 50 µm et une couche blanche d'une profondeur à partir d'une surface qui est inférieure ou égale à 3 µm.

3. Ensemble ressort hélicoïdal selon la revendication 2, dans lequel une dureté de la couche blanche du ressort hélicoïdal (3) est supérieure ou égale à 750 Hv.
